# EUROPEAN PATENT SPECIFICATION

(11) **EP 1 639 820 B1**
(45) Date of publication and mention of the grant of the patent: **27.12.2006**
(21) Application number: 04736939.2
(22) Date of filing: 16.06.2004
(51) Int. Cl.: H04N 7/088

(54) **METHOD OF CACHING TELETEXT PAGE DATA, TELETEXT RECEIVER SYSTEM AND TELEVISION SET**
VERFAHREN ZUM SPEICHERN VON TELETEXTDATEN, TELETEXTEMPFÄNGER UND FERNSEHEMPFÄNGER
PROCEDE DE MISE EN CACHE DE DONNEES DE PAGES DE TELETEXTE, SYSTEME RECEPTEUR DE TELETEXTE ET APPAREIL DE TELEVISION

(30) Priority: 20.06.2003 EP 03101818
(43) Date of publication of application: 29.03.2006
(73) Proprietor: Koninklijke Philips Electronics N.V., 5621 BA Eindhoven (NL)
(72) Inventor: TKACHENKO, Serhiy, NL-5656 AA Eindhoven (NL); VAN GESTEL, Henricus, A., W., NL-5656 AA Eindhoven (NL)
(74) Representative: Schmitz, Herman Jan Renier
(86) International application number: PCT/IB2004/050921
(87) International publication number: WO 2004/114659

(56) References cited:
- EP-A- 1 217 834
- DE-A- 19 531 072
- GB-A- 2 272 616
- PATENT ABSTRACTS OF JAPAN vol. 2000, no. 05, 14 September 2000 (2000-09-14) & JP 2000 050219 A (TOSHIBA CORP), 18 February 2000 (2000-02-18) cited in the application

## Description

The invention relates to a method of caching teletext page data in a memory unit of a teletext receiver system, comprising
- receiving and storing in the memory unit data representing a sequence of teletext pages embedded in a signal belonging to a first one of a plurality of channels; and
- subsequently receiving and storing in the memory unit data representing a sequence of teletext pages embedded in a signal belonging to a further one of the plurality of channels, whilst keeping at least some of the previously stored teletext page data stored in the memory unit,
wherein for each received teletext page, it is determined whether the memory unit has capacity available for storing the received teletext page data representing the received teletext page, and for each stored teletext page, information is stored associating the stored teletext page data representing the page with the channel to which the signal in which that teletext page data was embedded belongs.

The invention also relates to a teletext receiver system, comprising a controller and a memory unit arranged to receive data representing teletext pages from an arrangement of a channel selection circuit and a teletext data acquisition circuit.

The invention also relates to a television set, comprising a controller and a memory unit arranged to receive data representing teletext pages from an arrangement of a channel selection circuit and a teletext data acquisition circuit.

The invention further relates to a computer program.

An embodiment of a method, teletext receiver system and television set of the type mentioned above is known from JP-A-2000050219. In the known embodiment, the channel number is input as a channel selection signal from a keyboard and while supplying the control signal which tunes in the channel number to a channel selection circuit through a microcomputer, the channel sign of the channel number one is added and memorized to the program data header and page data header of character program data of the channel number one, which is read into a buffer memory and memorized. Next, the channel number two is tuned in and the channel sign of the channel number two is attached and memorized to the character program data for the channel number two at the aforementioned buffer memory. Thus, in case data is read from the buffer memory for presentation, by having added the channel sign into each character program data when the character program data of two or more channels were memorized by the buffer memory, read-out of the character program data of a desired channel becomes possible by carrying out the specification input of a channel sign and the program number. When the storage region of buffer memory becomes insufficient, one can always update to the newest character program data by rewriting the oldest character program data in the storage region of buffer memory.

A problem of the known method and system is that the oldest character program data can belong to a character program of the channel being watched and can therefore not be read from cache if required by the user, even though the fact that the channel to which it belongs makes it likely that it will be required.

It is an object of the invention to provide a method, teletext receiver system, television set and computer program of the types mentioned above, which decrease page retrieval latency after a channel switch.

This object is achieved by the method according to the invention, which is characterised by, upon determining that the memory unit has insufficient capacity, substituting the teletext page data representing the received teletext page for teletext page data associated with at least one different channel.

Because, after a channel switch, at least some of the previously stored teletext page data is kept stored in the memory unit, a subsequent switch back to the previous channel does not necessarily imply that the teletext page data representing each of the pages belonging to that channel need be written to the memory unit again. This substantially reduces the latency in comparison with systems in which the entire contents of the memory unit are erased after each channel switch. However, because, if the memory unit becomes too full to store newly received teletext page data embedded in the current channel, teletext page data associated with at least one different channel is replaced, as much of the teletext page data associated with the channel currently selected by the user is kept in the memory unit. This has the advantage of providing quick access to the pages most likely to be desired.

A preferred embodiment of the method according to the invention comprises receiving a user-initiated command requesting a desired teletext page, and using the stored information associating the teletext page data with a channel to search for the teletext page data representing the desired teletext page in the teletext page data associated with the channel to which the signal belongs in which teletext page data currently being received was embedded.

Thus, the retrieval of the teletext page data representing the desired teletext page is accelerated.

Preferably, the method comprises storing information reflecting at least one usage statistic for at least each channel associated with teletext page data stored in the memory unit and selecting the teletext page data for which the teletext page data representing the received teletext page is substituted on the basis of the stored information reflecting the usage statistics.

Thus, it is possible to make a distinction between relevant and not so relevant teletext pages for which data is stored in the memory unit, the relevant ones being kept cached longest.

A preferred embodiment of this variant updating the at least one usage statistic whenever teletext page data associated with the channel is read from the memory unit.

In this manner, the teletext page data representing the most relevant of the pages is kept cached in the memory unit. As reading out a page is done when it is desired by a viewer, one of the most pertinent statistics is used to decide which page to keep cached longest.

Preferably, the usage statistics comprise information enabling establishment of a ranking of all of the pages encoded by teletext page data stored in the memory unit, based on a most recent time of transfer in a pre-determined direction of the teletext page data representing each page across an interface of the memory unit.

The statistic may thus reflect either the time the teletext page data was written to the memory unit or the time it was last read from the memory unit. The latter variant is preferred, because it is indicative of the viewer's use of the teletext page rather than the frequency at which the teletext page data representing the page is updated.

Alternatively or additionally, the teletext page data is received from an arrangement of a channel selection circuit and a teletext data acquisition circuit, and the usage statistics for each channel comprise information representative of how often the channel has been selected.

Thus, the usage statistics indicate the relevance of the teletext page concerned to the particular user of the teletext receiver system in which this embodiment of the invention is employed, as determined by the number of times the channel is selected.

In a preferred embodiment of the method, in which both types of usage statistic are employed, at least part of the teletext page data for which the teletext page data representing the received teletext page is substituted is the least recently transferred teletext page data associated with the least often selected channel and selected on the basis of the stored information reflecting the usage statistics.

Thus, the teletext page data representing the teletext page likely to be of least relevance to the user is removed from the memory unit to make room for the latest received teletext page data.

In another embodiment of the method according to the invention, the teletext page data is received from an arrangement of a channel selection circuit and a teletext data acquisition circuit, and the usage statistics for each channel comprise information enabling establishment of a ranking of channels according to a most recent time of selection of each channel.

This embodiment allows statistics to be compiled that allow a faster adaptation to changing preferences.

In a preferred variant of this embodiment, at least part of the teletext page data for which the teletext page data representing the received teletext page is substituted is selected from among teletext page data stored in the memory unit and associated with a channel other than a most recently selected of the channels associated with teletext page data stored in the memory unit, preferably the least recently selected.

This embodiment is especially useful for use in television receivers with a feature for switching to the channel being watched before the current channel using a single command (e.g. pressing a single button on a remote control unit). With this variant, it is ensured that replacement of teletext page data associated with the channel being watched before the current channel is deferred as much as possible. Thus, not only can the viewer switch to the channel being watched before the current channel, but the teletext page data associated with that channel can almost certainly also be retrieved from cache without any latency being experienced.

According to another aspect of the invention, there is provided a teletext receiver system, comprising a controller and a memory unit arranged to receive data representing teletext pages from an arrangement of a channel selection circuit and a teletext data acquisition circuit, which teletext receiver system is arranged to carry out a method according to the invention.

According to another aspect of the invention, there is provided a television set, comprising a controller and a memory unit arranged to receive data representing teletext pages from an arrangement of a channel selection circuit and a teletext data acquisition circuit, which television set is arranged to carry out a method according to the invention.

According to another aspect of the invention, there is provided a computer program, capable, when run on a computer arranged to receive data representing teletext pages from an arrangement of a channel selection circuit and a teletext data acquisition circuit, of enabling the computer to carry out a method according to the invention.

The invention will now be explained in further detail with reference to the accompanying drawings, of which:
Fig. 1 shows an exemplary block diagram illustrating a television equipped to implement the invention;
Fig. 2 shows schematically the organisation of data stored in a memory unit of the television of Fig. 1; and
Fig. 3 is a flow chart illustrating an embodiment of the invention.

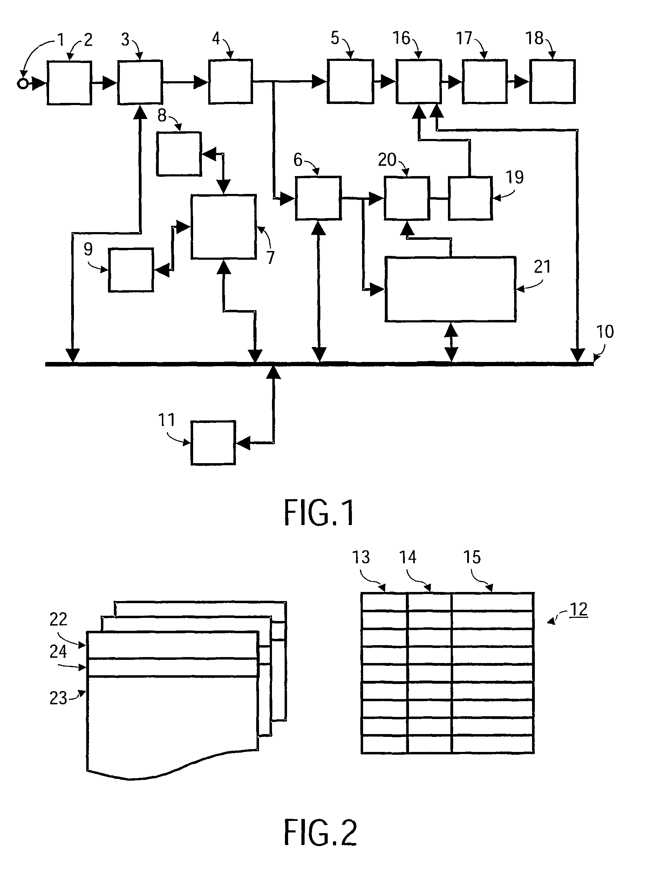

In the television system schematically shown in Fig. 1, a radio-frequency signal is received at an input 1 of a television receiver. The received signal passes through an RF amplifier 2 to a tuning circuit 3. The tuning circuit 3 tunes to a specific carrier frequency, associated with a television channel. Thus, the tuning circuit 3 retrieves a signal belonging to that channel, i.e. selects a signal belonging to one of a plurality of channels. The output signal of the tuning circuit 3 is passed to a demodulation circuit 4. the demodulation circuit separates video, audio and teletext components from the carrier signal. A colour decoder 5 retrieves and processes the video component. A teletext data acquisition circuit 6 retrieves teletext page data.

The television system is controlled by a microcontroller 7, which executes instructions stored in a Read Only Memory 8 of a known type. The microcontroller further has access to a non-volatile memory 9, for storing data that must not be erased when the television system's power is turned off. Commands and data are transferred between the microcontroller 7 and the various components operating under its control via a bus 10, for example an I²C bus.

A user of the television system enters commands via a remote control (not shown), which exchanges data with a remote control interface circuit 11. The commands are passed to the microcontroller 7 via the bus 10.

One command the viewer may enter, is a command to change channels. This command results in a command from the microcontroller 7 to the tuner 3 directing it to tune to a different frequency. A number of channels can be pre-set. To this end, a channel list 12 (see Fig. 2) is stored in the non-volatile memory 9. The channel list 12 is shown conceptually in Fig. 2 as a table, in which a first column 13 contains an index into the table, i.e. the number of the pre-set channel. A second column 14 contains the tuning information. Information in a third column 15 is used to manage the caching of teletext page data, as will be explained below.

Returning to Fig. 1, when teletext is not being viewed, the output of the colour decoder 5 is passed to a multiplexer 16, which passes it unaltered to a video amplifier 17 driving a video display unit 18. The latter may be a cathode ray tube or a plasma display for instance. When a viewer elects to view teletext pages, an appropriate signal is generated by a display section 19 decoding teletext page data loaded into a teletext memory 20. The output generated by the display section is used by the multiplexer 16 to replace part (in the case of subtitles) or all of the video signal provided by the colour decoder 5.

Teletext page data is transmitted in a carrousel, implying that a certain amount of time elapses between the receipt of teletext page data representing a first page and that representing a further page. In order to be able to provide a faster response to a viewer-initiated command selecting a specific page, the television system comprises a teletext page data cache 21. If a request for a specific page is received through the remote control interface circuit 11, the teletext page data cache 21 is searched for the page. If it is found, it is transferred to the teletext memory 20. If not, the teletext page data representing the requested page will have to be provided from the teletext data acquisition circuit 6, as soon as it has been provided by the tuning circuit 3 and demodulation circuit 4.

It will be appreciated that, if the tuner is set to a different frequency, i.e. a different channel is selected, it may take some while for the teletext page data cache 21 to fill with page data belonging to the newly selected channel. In the system presented here, this latency is reduced by keeping at least some of the previously stored teletext page data stored in the teletext page data cache 21 upon a channel change. Thus, it is possible to switch back again to the previous channel and access at least some of the teletext pages belonging to this previous channel without experiencing any latency.

Teletext page data belonging to a plurality of different channels may thus be present in the teletext page data cache 21 at any one time. Therefore, information associating the cached teletext page data with the channel to which the signal in which that teletext page data was embedded belongs, is also memorised. This information may be stored in the non-volatile memory 9 in the shape of a table linking channels to entries (e.g. memory address ranges) in the teletext page data cache 21. Alternatively, as is shown in Fig. 2, a channel tag 22 is added to each unit of teletext page data 23 representing a teletext page. The channel tag 22 allows pages with the same page number but belonging to different channels to be stored in the teletext page data cache 21.

Additionally, each stored unit of teletext page data 23 representing a page in the teletext page data cache 21 is tagged with time stamp information 24. When the teletext page data 23 is first written to the teletext page data cache 21, the value encoded in the time stamp information 24 is zero. The time stamp information 24 is one type of usage statistic, used to manage the caching of teletext page data in such a way that efficient use is made of the capacity offered by the teletext page data cache 21. In this context, the term statistic is used to denote a numerical data item that allows a channel or teletext page to be ranked relative to the other channels or teletext pages for which teletext page data is stored in the teletext page data cache 21. The usage statistic may refer both to usage in the sense of access (i.e. transfer to or from the teletext page data cache 21) to teletext page data originally embedded in a signal belonging to a certain channel, or it may indeed simply refer to channel selection, irrespective of whether the channel is selected for viewing teletext or normal programming.

In the embodiment detailed as an example here, the time stamp information reflects a most recent time of transfer in a pre-determined direction of the teletext page data representing the page across an interface of the memory unit. This may be the most recent time of transfer from the teletext data acquisition unit 6 to the teletext page data cache 21. Preferably, however, the information reflects a most recent time of transfer from the teletext page data cache 21 to the teletext memory 20. This namely is information indicative of the most recent access to the teletext page by a viewer. Thus, pages that are accessed by a viewer receive a time stamp reflecting the time of access. Pages that are never read from the teletext page data cache 21 retain a time stamp with value zero.

It is noted that an alternative embodiment to that described is also possible. In this alternative embodiment, information enabling establishment of a ranking of all of the pages encoded by teletext page data stored in the memory unit, based on a most recent time of transfer in a pre-determined direction of the teletext page data representing each page across an interface of the memory unit, is compiled without the use of time stamps. Instead, a list of pages or page numbers is created and stored. Whenever a page is used, i.e. transferred from the teletext page data cache 21 to the teletext memory 20, it or its number is placed at the top of the list. A new page or page number added to the list will move down all other entries on the list by one position. If a page already exists in the list, i.e. page data representing it is already stored in the teletext page data cache 21, it or its page number is moved from its present position to the top of the list, causing part of the entries on the list to move down.

Another type of usage statistic that is employed in the exemplary embodiment detailed here, is illustrated in Fig. 2. The third column 15 of the channel list 12 comprises information representative of how often the channel referred to in the first column 13 of the channel list 12 has been selected. The information may be updated each time a selection command is passed to the tuner 3, regardless of whether teletext is being used or not. In a more refined embodiment, the entries in the table are only updated when the channel is selected for viewing teletext pages transmitted on the channel. In order to avoid having to use a large-sized memory for storing the channel list 12, all entries in the third column 15 are renumbered from zero, while maintaining the order of sequence number contained therein. Thus, the ranking is a relative ranking, reflecting the frequency of selection of each channel relative to the other channels. Although the information is stored in the third column 15 of the channel list 12 in this embodiment, the information may also be stored as an additional tag in the teletext page data cache 21. Indeed, the ranking may be more refined, referring to individual pages belonging to a channel.

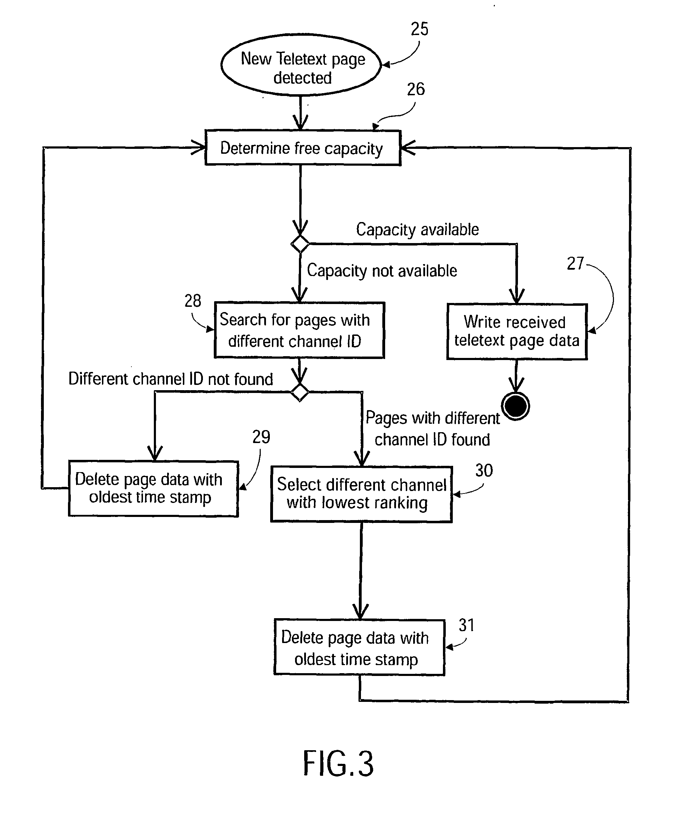

Referring to Fig. 3, the policy for replacing teletext page data in the teletext page data cache 21 with newly arrived teletext page data when the teletext page data cache 21 is full, will now be explained. It is noted that, due to differing data sizes, teletext page data representing one newly arrived teletext page may replace teletext page data representing several cached teletext pages.

In a first step 25, it is determined that the newly arrived teletext page data encodes a teletext page not yet contained in teletext page data cache 21. The determination can be made by the microcontroller 7, which processes the commands selecting a channel received through the remote control interface circuit 11. It thus knows the channel to which the newly arrived page belongs. The page number is encoded in the teletext page data itself, specifically the header, as is known in the art. Using the channel tags 22 and stored teletext page data 23 it can be ascertained that the newly arrived page has not yet been cached. Obviously, the stored teletext page data 23 can also be used for a comparison to determine whether the stored teletext page data 23 should be replaced by a newer version of the page.

In step 26, it is determined whether there is enough space in the teletext page data cache 21 to store the teletext page data received. If there is, then, in step 27, the received teletext page data is transferred to the teletext page data cache 21 through the tuner 3, demodulation circuit 4 and teletext data acquisition circuit 6. Step 27 includes the steps of generating the channel tag 22 and time stamp information 24 and tagging the newly received teletext page data with these.

If there is not enough capacity, then the method proceeds to a step 28 in which it is determined whether pages with a channel tag 22 referring to a different channel than the one to which the tuner 3 is currently tuned, are stored in the teletext page data cache 21. If no such pages are found, then the time stamp information 24 is used to delete the oldest page data in the teletext page data cache 21 belonging to the same channel as the newly arrived teletext page data (step 29). Specifically, any pages with time stamp zero are deleted first. If none of these are left, the teletext page data with the least recent time stamp is deleted.

Assuming that pages with a channel tag 22 of a different value are found in step 28, then the channel list 20 (Fig. 2) is used to determine which teletext page data the newly arrived teletext page data is to be substituted for. As an advantageous, optional feature of the method described here, the channel with the ranking corresponding to the lowest frequency of access according to the information in the third column 15 is selected (step 30). From among the teletext page data belonging to the selected channel, that with the least recent time stamp is deleted (step 31). Thus, it is ensured that teletext page data originally embedded in a signal belonging to a viewer's favourite channel is deleted last. It is noted that, by making a selection among channels in the step 30 preceding the step 31 in which the time stamp information is analysed, a time saving is achieved. Searching the time stamp information 24 is more time consuming, and thanks to the pre-selection effectively carried out in step 30, less of it need be searched.

In an alternative embodiment of the invention, not shown in a flow diagram, a slightly different policy for replacing teletext page data stored in the teletext page data cache 21 is used. In this embodiment, the usage statistics for each channel comprise information enabling establishment of a ranking of channels according to a most recent time of selection of each channel.

For this purpose, the third column 15 of the channel list 12 may comprise information representative of the last time the channel referred to in the first column 13 of the channel list 12 was selected, instead of information representative of the frequency of access. The information may be updated each time a selection command is passed to the tuner 3, regardless of whether teletext is being used or not. Alternatively, the order of the entries in the channel list 12 may reflect the order in which they were last accessed, thus establishing a ranking. In one embodiment, the entries in the table reflect only the most recent time the channel was selected for viewing teletext pages transmitted on the channel. Alternatively, the information may also be stored as an additional tag in the teletext page data cache 21.

In the preferred variant of the embodiment using a ranking according to the most recent time of selection of a channel, the step 30 in Fig. 3 is not carried out, but replaced by a step in which the teletext page data associated with a channel other than a most recently selected of channels associated with teletext page data stored in the teletext page data cache 21 is selected. Preferably this is the least recently selected of those channels. Subsequently, the page data with the oldest time stamp may be replaced, or the page data least frequently transferred from the teletext page data cache 21. This depends on the particular implementation. An advantage of using the most recent time of selection of channels as a basis for a replacement policy, is that changing preferences are taken account of more quickly. This could be useful where several viewers share a television set, in order to prevent the statistics determined by the behaviour of a previous viewer from overly affecting the cache replacement policy employed when a new viewer is using the television set.

It should be noted that the above-mentioned embodiment illustrates rather than limits the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

Thus, for example, the method according to the invention may also be carried out by a computer, for example a personal computer, operatively connected to a television tuner and teletext data acquisition circuit. The latter may be installed on a tuner card installed in the computer, or in an external tuner, connected to the computer by means of, for example a USB link. In this setting, the method may be used to manage the caching of teletext page data in a memory circuit of the tuner or the personal computer, in order to achieve the same advantages as are achieved in the embodiment described in more detail herein above.

## Claims

1. Method of caching teletext page data in a memory unit (21) of a teletext receiver system, comprising
- receiving and storing in the memory unit (21) data representing a sequence of teletext pages embedded in a signal belonging to a first one of a plurality of channels; and
- subsequently receiving and storing in the memory unit (21) data representing a sequence of teletext pages embedded in a signal belonging to a further one of the plurality of channels, whilst keeping at least some of the previously stored teletext page data stored in the memory unit (21),
wherein for each received teletext page, it is determined whether the memory unit (21) has capacity available for storing the received teletext page data representing the received teletext page, and for each stored teletext page, information is stored associating the stored teletext page data representing the page with the channel to which the signal in which that teletext page data was embedded belongs, **characterised by**,
upon determining that the memory unit has insufficient capacity, substituting the teletext page data representing the received teletext page for teletext page data associated with at least one different channel.

2. Method according to claim 1, comprising receiving a user-initiated command requesting a desired teletext page, using the stored information associating the teletext page data with a channel to search for the teletext page data representing the desired teletext page in the teletext page data associated with the channel to which the signal belongs in which teletext page data currently being received was embedded.

3. Method according to claim 1 or 2, comprising storing information (15;24) reflecting at least one usage statistic for at least each channel associated with teletext page data stored in the memory unit (21) and selecting the teletext page data for which the teletext page data representing the received teletext page is substituted on the basis of the stored information (15;24) reflecting the usage statistics.

4. Method according to claim 3, comprising updating the at least one usage statistic whenever teletext page data associated with the channel is read from the memory unit (21).

5. Method according to claim 3 or 4, wherein the usage statistics comprise information (24) enabling establishment of a ranking of all of the pages encoded by teletext page data stored in the memory unit (21), based on a most recent time of transfer in a pre-determined direction of the teletext page data representing each page across an interface of the memory unit (21).

6. Method according to any one of claims 3-5, wherein the teletext page data is received from an arrangement of a channel selection circuit (3) and a teletext data acquisition circuit (6), and the usage statistics for each channel comprise information (15) representative of how often the channel has been selected.

7. Method according to claims 4, 5 and 6, wherein at least part of the teletext page data for which the teletext page data representing the received teletext page is substituted is the least recently transferred teletext page data associated with the least often selected channel and selected on the basis of the stored information (15;24) reflecting the usage statistics.

8. Method according to any one of claims 3-6, wherein the teletext page data is received from an arrangement of a channel selection circuit (3) and a teletext data acquisition circuit (6), and the usage statistics for each channel comprise information enabling establishment of a ranking of channels according to a most recent time of selection of each channel.

9. Method according to claim 8, wherein at least part of the teletext page data for which the teletext page data representing the received teletext page is substituted is selected from among teletext page data stored in the memory unit (21) and associated with a channel other than a most recently selected of the channels associated with teletext page data stored in the memory unit (21), preferably the least recently selected.

10. Teletext receiver system, comprising a controller (7) and a memory unit (21) arranged to receive data representing teletext pages from an arrangement of a channel selection circuit (3) and a teletext data acquisition circuit (6), which teletext receiver system is arranged to carry out a method according to any one of claims 1-9.

11. Television set, comprising a controller (7) and a memory unit (21) arranged to receive data representing teletext pages from an arrangement of a channel selection circuit (3) and a teletext data acquisition circuit (6), which television set is arranged to carry out a method according to any one of claims 1-9.

12. Computer program, capable, when run on a computer arranged to receive data representing teletext pages from an arrangement of a channel selection circuit (3) and a teletext data acquisition circuit (6), of enabling the computer to carry out a method according to any one of claims 1-9.

## Patentansprüche

1. Verfahren zum Speichern von Teletextseitendaten in einer Speichereinheit (21) eines Teletextempfängersystems, umfassend
- Empfangen von Daten, die eine Abfolge von Teletextseiten darstellen und in ein Signal eingebettet sind, das zu einem ersten aus mehreren Kanälen gehört, und Speichern der Daten in der Speichereinheit (21); und
- anschließendes Empfangen von Daten, die eine Abfolge von Teletextseiten darstellen und in ein Signal eingebettet sind, das zu einem weiteren der mehreren Kanäle gehört, und Speichern der Daten in der Speichereinheit (21), während zumindest einige der vorher gespeicherten Teletextseitendaten in der Speichereinheit (21) gespeichert behalten werden,
wobei für jede empfangene Teletextseite bestimmt wird, ob die Speichereinheit (21) eine verfügbare Kapazität aufweist, um die empfangenen Teletextseitendaten, die die empfangene Teletextseite darstellen, zu speichern, und für jede gespeicherte Teletextseite Informationen gespeichert werden, die die gespeicherten Teletextseitendaten, die die Seite darstellen, mit dem Kanal verknüpfen, zu dem das Signal, in dem die Teletextseitendaten eingebettet waren, gehört, **dadurch gekennzeichnet, dass**
nach dem Bestimmen, dass die Speichereinheit über eine unzureichende Kapazität verfügt, Teletextseitendaten, die mit zumindest einem anderen Kanal verknüpft sind, durch Teletextseitendaten ersetzt werden, die die empfangene Teletextseite darstellen.

2. Verfahren nach Anspruch 1, umfassend das Empfangen eines durch den Benutzer eingebrachten Befehls, der eine gewünschte Teletextseite verlangt, und das Verwenden der gespeicherten Informationen, die die Teletextseitendaten mit einem Kanal verknüpfen, um die Teletextseitendaten, die die gewünschte Teletextseite darstellen, in den Teletextseitendaten zu suchen, die mit dem Kanal verknüpft sind, zu dem das Signal, in dem die gegenwärtig empfangenen Teletextseitendaten eingebettet waren, gehört.

3. Verfahren nach Anspruch 1 oder 2, umfassend das Speichern von Informationen (15; 24), die zumindest eine Nutzungsstatistik für zumindest jeden Kanal, der mit in der Speichereinheit (21) gespeicherten Teletextseitendaten verknüpft ist, widerspiegeln, und das Wählen der Teletextseitendaten, die durch jene Teletextseitendaten, die die empfangene Teletextseite darstellen, ersetzt werden, auf Basis der gespeicherten Informationen (15; 21), die die Nutzungsstatistik widerspiegeln.

4. Verfahren nach Anspruch 3, umfassend das Aktualisieren der zumindest einen Nutzungsstatistik jedes Mal, wenn Teletextseiten, die mit dem Kanal verknüpft sind, aus der Speichereinheit gelesen werden.

5. Verfahren nach Anspruch 3 oder 4, wobei die Nutzungsstatistiken Informationen (24) umfassen, die es ermöglichen, auf Basis einer jüngsten Zeit der Übertragung der Teletextseitendaten, die jede Seite darstellen, in einer vorbestimmten Richtung über eine Schnittstelle der Speichereinheit (21) eine Rangordnung aller Seiten, die durch in der Speichereinheit (21) gespeicherte Teletextseitendaten codiert sind, zu erstellen.

6. Verfahren nach einem der Ansprüche 3 bis 5, wobei die Teletextseitendaten von einer Anordnung aus einer Kanalwahlschaltung (3) und einer Teletextdatenerlangungsschaltung (6) empfangen werden und die Nutzungsstatistiken für jeden Kanal Informationen (15) umfassen, die angeben, wie oft der Kanal gewählt wurde.

7. Verfahren nach Anspruch 4,5 und 6, wobei zumindest Teile jener Teletextseitendaten, die durch die Teletextseitendaten, die die empfangene Teletextseite darstellen, ersetzt werden, die am wenigsten kürzlich übertragenen Teletextseitendaten sind, die mit dem am wenigsten oft gewählten Kanal verknüpft sind und auf Basis der gespeicherten Informationen (15; 24), die die Nutzungsstatistiken widerspiegeln, gewählt werden.

8. Verfahren nach einem der Ansprüche 3 bis 6, wobei die Teletextseitendaten von einer Anordnung aus einer Kanalwahlschaltung (3) und einer Teletextdatenerlangungsschaltung (6) empfangen werden und die Nutzungsstatistiken für jeden Kanal Informationen umfassen, die es ermöglichen, eine Rangordnung der Kanäle gemäß einer jüngsten Zeit der Wahl jedes Kanals zu erstellen.

9. Verfahren nach Anspruch 8, wobei zumindest Teile jener Teletextseitendaten, die durch die Teletextseitendaten, die die empfangene Teletextseite darstellen, ersetzt werden, aus Teletextseitendaten gewählt werden, die in der Speichereinheit (21) gespeichert sind und zu einem anderen Kanal als einem am jüngsten gewählten der Kanäle, die mit in der Speichereinheit (21) gespeicherten Teletextseitendaten verknüpft sind, vorzugsweise dem am wenigsten jüngst gewählten, gehören.

10. Teletextempfängersystem, umfassend eine Steuerung (7) und eine Speichereinheit (21), die dazu eingerichtet sind, Daten, die Teletextseiten darstellen, von einer Anordnung aus einer Kanalwahlschaltung (3) und einer Teletextdatenerlangungsschaltung (6) zu empfangen, wobei das Teletextempfängersystem dazu eingerichtet ist, ein Verfahren nach einem der Ansprüche 1 bis 9 auszuführen.

11. Fernsehempfänger, umfassend eine Steuerung (7) und eine Speichereinheit (21), die dazu eingerichtet sind, Daten, die Teletextseiten darstellen, von einer Anordnung aus einer Kanalwahlschaltung (3) und einer Teletextdatenerlangungsschaltung (6) zu empfangen, wobei der Fernsehempfänger dazu eingerichtet ist, ein Verfahren nach einem der Ansprüche 1 bis 9 auszuführen.

12. Computerprogramm, das dann, wenn es auf einem Computer läuft, der dazu eingerichtet ist, Daten, die Teletextseiten darstellen, von einer Anordnung aus einer Kanalwahlschaltung (3) und einer Teletextdatenerlangungsschaltung (6) zu empfangen, den Computer befähigt, ein Verfahren einem der Ansprüche 1 bis 9 auszuführen.

## Revendications

1. Procédé de mise en antémémoire de données de pages de télétexte dans une unité de mémoire (21) d'un système récepteur de télétexte, comprenant :
- la réception et le stockage dans l'unité de mémoire (21) de données représentant une série de pages de télétexte imbriquées dans un signal appartenant à un premier d'une pluralité de canaux, et
- la réception et le stockage subséquents dans l'unité de mémoire (21) de données représentant une série de pages de télétexte imbriquées dans un signal appartenant à un canal supplémentaire de la pluralité de canaux, tout en gardant au moins certaines des données de pages de télétexte stockées auparavant dans l'unité de mémoire (21),
dans lequel, pour chaque page de télétexte reçue, il est déterminé si l'unité de mémoire (21) a une capacité disponible pour stocker les données de pages de télétexte reçues représentant la page de télétexte reçue, et pour chaque page de télétexte stockée, des informations sont stockées qui associent les données de pages de télétexte stockées représentant la page au canal auquel appartient le signal dans lequel les données de pages de télétexte sont imbriquées, **caractérisé par**,
suite à la détermination du fait que l'unité de mémoire dispose d'une capacité insuffisante, la substitution des données de pages de télétexte représentant la page de télétexte reçue aux données de pages de télétexte associées à au moins un canal différent.

2. Procédé suivant la revendication 1, comprenant la réception d'une instruction lancée par l'utilisateur demandant une page de télétexte souhaitée, en utilisant les informations stockées associant les données de pages de télétexte à un canal pour rechercher les données de pages de télétexte représentant la page de télétexte souhaitée dans les données de pages de télétexte associées au canal auquel appartient le signal dans lequel les données de pages de télétexte actuellement reçues sont imbriquées.

3. Procédé suivant la revendication 1 ou 2, comprenant le stockage d'informations (15 ; 24) reflétant au moins une statistique d'utilisation pour au moins chaque canal associé aux données de pages de télétexte stockées dans l'unité de mémoire (21) et la sélection des données de pages de télétexte pour lesquelles les données de pages de télétexte représentant la page de télétexte reçue sont substituées sur la base des informations stockées (15 ; 24) reflétant les statistiques d'utilisation.

4. Procédé suivant la revendication 3, comprenant la mise à jour de la au moins une statistique d'utilisation à chaque fois que les données de pages de télétexte associées au canal sont lues dans l'unité de mémoire (21).

5. Procédé suivant la revendication 3 ou 4, dans lequel les statistiques d'utilisation comprennent des informations (24) permettant l'établissement d'un classement de toutes les pages codées par les données de pages de télétexte stockées dans l'unité de mémoire (21), sur la base d'un temps le plus récent de transfert dans une direction prédéterminée des données de pages de télétexte représentant chaque page dans une interface de l'unité de mémoire (21).

6. Procédé suivant l'une quelconque des revendications 3 à 5, dans lequel les données de pages de télétexte sont reçues d'un montage reposant sur un circuit de sélection de canaux (3) et un circuit d'acquisition de données de télétexte (6), et les statistiques d'utilisation pour chaque canal comprennent des informations (15) représentant la fréquence avec laquelle le canal a été sélectionné.

7. Procédé suivant l'une quelconque des revendications 4, 5 et 6, dans lequel au moins une partie des données de pages de télétexte pour lesquelles les données de pages de télétexte représentant la page de télétexte reçue sont substituées correspond aux données de pages de télétexte transférées le moins récemment associées au canal sélectionné le moins souvent et sélectionnées sur la base des informations stockées (15 ; 24) reflétant les statistiques d'utilisation.

8. Procédé suivant l'une quelconque des revendications 3 à 6, dans lequel les données de pages de télétexte sont reçues d'un montage reposant sur un circuit de sélection de canaux (3) et un circuit d'acquisition de données de télétexte (6), et les statistiques d'utilisation pour chaque canal comprennent des informations permettant l'établissement d'un classement de canaux en fonction d'un temps le plus récent de sélection de chaque canal.

9. Procédé suivant la revendication 8, dans lequel au moins une partie des données de pages de télétexte pour lesquelles les données de pages de télétexte représentant la page de télétexte reçue sont substituées est sélectionnée parmi les données de pages de télétexte stockées dans l'unité de mémoire (21) et associée à un canal autre qu'un canal sélectionné le plus récemment des canaux associés aux données de pages de télétexte stockées dans l'unité de mémoire (21), de préférence celui sélectionné le moins récemment.

10. Système récepteur de télétexte, comprenant un contrôleur (7) et une unité de mémoire (21) apte à recevoir des données représentant des pages de télétexte d'un montage reposant sur un circuit de sélection de canaux (3) et un circuit d'acquisition de données de télétexte (6), lequel système récepteur de télétexte est apte à exécuter un procédé suivant l'une quelconque des revendications 1 à 9.

11. Téléviseur, comprenant un contrôleur (7) et une unité de mémoire (21) apte à recevoir des données représentant des pages de télétexte d'un montage reposant sur un circuit de sélection de canaux (3) et un circuit d'acquisition de données de télétexte (6), lequel téléviseur est apte à exécuter un procédé suivant l'une quelconque des revendications 1 à 9.

12. Programme informatique qui, lors de son exécution sur un ordinateur apte à recevoir des données représentant des pages de télétexte provenant d'un montage reposant sur un circuit de sélection de canaux (3) et un circuit d'acquisition de données de télétexte (6), est en mesure de permettre à l'ordinateur d'exécuter un procédé suivant l'une quelconque des revendications 1 à 9.
